# EUROPÄISCHE PATENTANMELDUNG

(11) **EP 2 418 373 A1**
(43) Veröffentlichungstag der Anmeldung: **15.02.2012**
(21) Anmeldenummer: 10172632.1
(22) Anmeldetag: 12.08.2010
(51) Int. Cl.: F02M 25/07

(54) **Aktuator und Abgasrückführventil, Wastegate oder variable Turbinengeometrie eines Turboladers mit einem Aktuator**

(71) Anmelder: Cooper-Standard Automotive (Deutschland) GmbH, 89601 Schelklingen (DE)
(72) Erfinder: Klipfel, Bernhard, 76187, Karlsruhe (DE); Thiery, Christoph, 68239, Mannheim (DE); Arthur, Janik, 68723 Oftersheim (DE)
(74) Vertreter: HOFFMANN EITLE

(57) **Zusammenfassung**

Es wird ein Aktuator mit einem Antrieb, zumindest einem drehbaren Gewindeelement (18) und zumindest einem hierdurch translatorisch angetriebenen Abtriebselement beschrieben, der sich dadurch auszeichnet, dass das Gewindeelement (18) zumindest zwei Bereiche unterschiedlicher Steigung aufweist.

## Beschreibung

### Technisches Gebiet

Die Erfindung betrifft einen Aktuator sowie ein Abgasrückführventil, ein Wastegate oder eine variable Turbinengeometrie eines Turboladers mit einem derartigen Aktuator.

Auf dem Gebiet der Verbrennungsmotoren ist es bekannt in Abhängigkeit von Betriebszustand Abgas auf die Frischluftseite zurückzuführen, um den Kraftstoffverbrauch und die Schadstoffemissionen zu senken. Hierbei kann das zugehörige Ventil einen translatorisch verschiebbaren Ventilstößel oder eine durch einen Hebel betätigbare Klappe besitzen, während es für den Aktuator vorteilhaft sein kann, einen Drehantrieb aufzuweisen. Dies gilt in gleicher Weise für Wastegates und/oder variable Turbinengeometrien von Abgasturboladern, die durch einen translatorisch verschiebbaren Stößel eingestellt werden können.

### Stand der Technik

Aus der EP 1 111 227 A2 ist ein Abgasrückführventil bekannt, bei dem die Drehbewegung eines Antriebs in eine translatorische Bewegung des Ventilelements umgewandelt wird. Zumindest zu Beginn des Öffnungsvorganges wird dem Ventilelement eine Drehbewegung erteilt.

Die EP 1 526 271 A1 betrifft ein Abgasrückführventil, bei dem die Drehbewegung eines Antriebs in eine Hubbewegung des Ventilelements umgewandelt wird, wobei sich das Ventilelement beim Öffnen mit dem Antriebselement drehen kann, jedoch nicht zwangsweise mit diesem mitgedreht wird. Die Umwandlung der Dreh- in eine Hubbewegung erfolgt im Wesentlichen durch eine angetriebene "Schnecke" mit einem Gewindegang, die mit einem ortsfesten, jedoch drehbaren Rad in Eingriff steht.

### Darstellung der Erfindung

Der Erfindung liegt die Aufgabe zugrunde, einen Aktuator zu schaffen, der insbesondere im Hinblick auf seine Betriebseigenschaften verbessert ist.

Die Lösung dieser Aufgabe erfolgt durch den in Anspruch 1 beschriebenen Aktuator.

Demzufolge weist dieser einen Antrieb, zumindest ein drehbares Gewindeelement und zumindest ein translatorisch angetriebenes Abtriebselement auf. Der Antrieb des Aktuators ist bevorzugt, jedoch nicht hierauf beschränkt, als Drehantrieb ausgeführt. Bei dem drehbaren Gewindeelement kann es sich beispielsweise um eine Schnecke mit einem Gewindegang oder einem Teil eines Gewindeganges oder ein sonstiges Gewindeelement handeln. Die Schnecke könnte in englischer Sprache als "worm" bezeichnet werden. Mit der Schnecke steht das translatorisch angetriebene Abtriebselement derart in Eingriff, dass eine Drehung der Schnecke zu einer translatorischen Bewegung des Abtriebselements führt. Das Abtriebselement kann beispielsweise ein von dem Ventilstößel vorstehender Abschnitt, ein(e) daran vorstehende(s) und mit der Schnecke in Eingriff stehende(s) Rad oder Rolle, oder ein Element mit einem Gegengewinde sein.

Erfindungsgemäß weist das Gewindeelement zumindest zwei Bereiche unterschiedlicher Steigung auf. Mit anderen Worten kann der Gewindegang in einzelnen Bereichen flacher oder steiler sein als in anderen. Durch eine flache Steigung lässt sich eine größere Öffnungskraft übertragen, was mit einem größeren Verdrehweg einhergeht. Eine derartige vergleichsweise große Kraft kann beispielsweise zu Beginn der Öffnungsbewegung eines Ventils dazu benutzt werden, eine besonders hohe Kraft aufzubringen, beispielsweise um Verklebungen zu lösen. Sobald diese gelöst sind, kann sich die Kraft verringern, so dass das Gewinde in diesem Bereich steiler gestaltet sein kann. Beispielhaft sei erwähnt, dass beispielsweise über den ersten Millimeter eines Ventilhubs eine Kraft zwischen 400 N und 250 N bis 300 N erzeugt werden kann, während sich diese Kraft im weiteren Bereich des Ventilhubs zwischen 200 N und 300 N bewegt. Der flachere Bereich kann hierbei beispielsweise einer Verdrehung von 40° bis 70° entsprechen. Ferner kann der Übergang zu einem steileren Bereich nicht notwendigerweise als Knick erfolgen, sondern als sanfte Rundung, die sich beispielsweise über einen Winkel von 90° bis 100° erstreckt. Mit anderen Worten ist ein Bereich vorgesehen, in dem sich die Steigung kontinuierlich von derjenigen eines flachen Bereichs zu derjenigen eines steileren Bereichs erhöht oder in umgekehrter Richtung verringert. Der gesamte Verdrehbereich des Gewindeelements kann beispielsweise 300° bis 500° oder mehr betragen.

Bevorzugte Weiterbildungen sind in den weiteren Ansprüchen beschrieben.

Wie erwähnt, lässt sich der erfindungsgemäße Grundgedanke besonders vorteilhaft nutzen, wenn das Gewinde an einem Beginn eine flachere Steigung aufweist als in anderen Bereichen. Der Beginn des Gewindes kann in vorteilhafter Weise dem Beginn eines Öffnungsvorgangs entsprechen, so dass sich hier eine besonders hohe Kraft erzeugen lässt. Bevorzugt ist eine Rotationsachse des Gewindeelements bezüglich einer Translationsachse des Abtriebselements geneigt. Im geometrischen Sinne sind die beiden Achsen windschief zueinander. Dies führt im Wesentlichen dazu, dass die Kraftübertragung zwischen Gewinde- und Abtriebselement in einer Richtung erfolgt, die nicht oder zumindest nicht so umfangreich wie bisher bezüglich der Kontaktfläche des Gewindeelements geneigt ist. Herkömmlich, wenn die Rotationsachse des Gewindeelements und die Translationsachse des Abtriebselements zueinander parallel sind, erfolgt die Kraftübertragung von der Schnecke auf das Abtriebselement über eine Fläche, die bezüglich der Translationsachse des Abtriebselements geneigt ist. Dies hat zur Folge, dass eine seitens des Abtriebselements aufgebrachte, geradlinige Kraft, beispielsweise infolge des Gasdrucks, zu einer Verdrehung des Gewindeelements führen kann, was eine unbeabsichtigte Verstellung eines Ventilelements zur Folge hat. Bei dem erfindungsgemäßen Aktuator ist eine derartige Neigung zwischen der Translationsachse des Abtriebselements und der Rotationsachse des Gewindeelements reduziert, so dass höhere Kräfte für das Verdrehen des Gewindeelements erforderlich sind. Hierdurch kann in der Praxis weitgehend ausgeschlossen werden, dass sich ein Ventil durch Gaskräfte unbeabsichtigt verstellt.

Insbesondere wird bevorzugt, dass das Gewindeelement eine Oberfläche aufweist, mit der zumindest ein Abschnitt, beispielsweise der erwähnte Vorsprung oder das beschriebene Rädchen, des Abtriebselements in Berührung steht, und welche Oberfläche zumindest an einem Beginn des Gewindes weitgehend senkrecht zur Translationsachse des Abtriebselements ist. Durch diese Anordnung wirkt eine jegliche, von dem Abtriebselement aufgebrachte Kraft, in einer Richtung weitgehend senkrecht zur Oberfläche an dem Gewindeelement, und kann dementsprechend keine unbeabsichtigte Verdrehung desselben bewirken. Somit ist insbesondere in Kombination mit der Tatsache, dass das Gewinde an seinem Beginn vergleichsweise flach ausgeführt ist, in vorteilhafter Weise gewährleistet, dass auch bei entsprechendem Abgasgegendruck keine unbeabsichtigte Öffnung eines Abgasrückführventils erfolgt.

Für den erfindungsgemäßen Aktuator wird ferner eine Kombination mit einem Ventilelement bevorzugt, das lediglich translatorisch bewegbar, jedoch nicht verdrehbar ist. Hierdurch können Verzögerungen und Behinderungen der Öffnungsbewegung beim Ansprechverhalten in vorteilhafter Weise reduziert werden.

Es wird derzeit ferner bevorzugt, dass eine Stelle, an der ein Abschnitt des Abtriebselements mit dem Gewindeelement in Berührung steht, zumindest weitgehend mit einer Achse eines translatorisch bewegten Ventilelements fluchtet. Hierdurch werden auf die Anordnung bestehend aus translatorisch bewegtem Ventilelement und damit wirkverbundenem Abtriebselement keine Quer- oder Seitenkräfte auf das Abtriebselement und dessen Führung aufgebracht. Dies bietet für den dauerhaften Betrieb des Ventils Vorteile. Zu der vorangehend beschriebenen Maßnahme sei erwähnt, dass sie auch ohne der oben beschriebenen Neigung der Rotations- bezüglich der Translationsachse ihre Vorteile entfaltet und dementsprechend unabhängig davon als Gegenstand der Anmeldung anzusehen ist. Die beschriebene Orientierung einer Kontaktstelle an dem Gewindeelement zu der Translationsachse des Ventilelements kann jedoch mit dem oben beschriebenen Merkmal ebenso wie mit sämtlichen nachfolgend angegebenen Merkmalen in vorteilhafter Weise kombiniert werden.

Im Hinblick auf die Öffnungsrichtung des Ventilelements wird derzeit ferner bevorzugt, dass sie gegen Abgasdruck verläuft. Hierdurch kann der Abgasgegendruck in vorteilhafter Weise dafür genutzt werden, das Schließen des Ventils zu unterstützen, und damit die Leckmenge im geschlossenen Zustand zu minimieren.

Bevorzugt ist zwischen dem Antrieb und dem Gewindeelement ein Getriebe vorgesehen, das einstufig ausgeführt ist. Durch eine derartige einstufige Übersetzung verbessert sich das Ansprechverhalten des Ventils, insbesondere infolge der verringerten Reibung und einer geringeren Massenträgheit. Alternativ kann das Getriebe auch zwei- oder mehrstufig sein, was die Erzeugung höherer Kräfte ermöglicht.

Bevorzugt ist das Gewindeelement ferner zumindest mittelbar mit einem Federelement, beispielsweise einer Spiralfeder, verbunden, das lediglich verdreht wird. Ein derartiges Federelement stellt in vorteilhafter Weise im Sinne eines "failsafe" auch bei einer Störung oder Unterbrechung im elektrischen System sicher, dass das Ventil schließt.

Für ein Ventilgehäuse, in dem das Ventilelement angeordnet ist, hat es sich ferner als günstig erwiesen, dieses einstückig, beispielsweise als Gussgehäuse, auszuführen. Hierdurch kann die Anzahl der verwendeten Teile in vorteilhafter Weise verringert werden.

Schließlich wird derzeit bevorzugt, das Ventilgehäuse mit zumindest einem Kühlkanal zu versehen. Hierdurch kann das Ventilgehäuse insbesondere in der Umgebung eines Ventilstößels gekühlt werden, so dass die Dauerhaftigkeit des Ventilstößels und der Stößelabdichtung und -führung und damit des Abgasrückführventils insgesamt verbessert werden kann.

Neben einem Abgasrückführventil wird eine Kombination zumindest eines erfindungsgemäßen Aktuators mit einem Wastegate und/oder einer variablen *Turbinengeometrie eines Turboladers offenbart. In diesem Zusammenhang sei im Hinblick auf die Kombination sowohl mit einem Abgasrückführventil als auch mit den genannten Komponenten eines Turboladers auf die EP 2 172 682 A1 verwiesen, deren Offenbarung im Hinblick auf Details des Aktuators, des Abgasrückführventils und/oder des dort als Gewindeelement bezeichneten Gewindeelements zum Gegenstand der vorliegenden Anmeldung gemacht wird. Im Hinblick auf ein Wastegate und/oder eine variable Turbinengeometrie eines Turboladers gilt dies in besonderer Weise für die am gleichen Tag eingereichte Anmeldung mit dem Titel "Aktuator für ein Wastegate oder eine variable Turbinengeometrie sowie Verwendung eines Aktuators für ein Wastegate oder eine variable Turbinengeometrie" der Anmelderin. Mit anderen Worten können sämtliche darin offenbarte Details eines Wastegates, einer variablen Turbinengeometrie und/oder des darin offenbarten Aktuators beim Aktuator gemäß der vorliegenden Anmeldung, auch bei Verwendung mit einem Ventil, insbesondere Abgasrückführventil angewendet werden.

### Kurze Beschreibung der Zeichnungen

Nachfolgend wird die Erfindung anhand einer beispielhaft in den Zeichnungen dargestellten Ausführungsform näher erläutert. Es zeigen:
- Fig. 1: eine Seitenansicht des Gewindeelements eines erfindungsgemäßen Aktuators; und
- Fig. 2: eine Abwicklung des Gewindeganges des in Fig. 1 gezeigten Gewindeelements.

### Ausführliche Beschreibung einer bevorzugten Ausführungsform der Erfindung

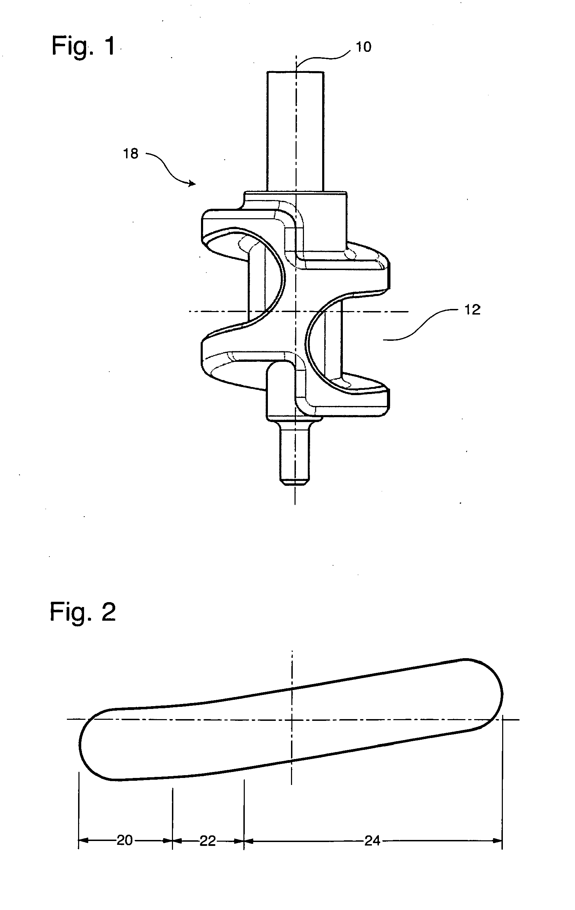

In Fig. 1 ist in einer Seitenansicht das Gewindeelement 18 eines erfindungsgemäßen Aktuators zu erkennen, das um eine Achse 10 drehbar ist. Das Gewindeelement 18 weist in dem gezeigten Fall einen nahezu vollständigen Gewindegang 12 auf, in dem sich im montierten Zustand beispielsweise eine Rolle befindet, die am oberen Ende eines Ventilstößels vorgesehen ist. Wenn der Ventilstößel axial geführt ist und sich insoweit nicht um die Achse 10 drehen kann, während sich das Gewindeelement 18 um die Achse 10 dreht, wird eine Drehbewegung des Gewindeelements 18 in eine translatorische (Hub-)Bewegung eines Stößels umgewandelt.

In Fig. 2 ist gezeigt, wie die Steigung des Gewindes des Gewindeelements 18 bereichsweise unterschiedlich ist. Am Beginn (Bereich 20) ist dieses vergleichsweise flach, um hier beispielsweise zu Beginn einer Öffnungsbewegung eine besonders große Kraft erzeugen zu können. Hieran schließt sich ein Bereich 22 mit einer kontinuierlich ansteigenden Steigung an, der zu einem Bereich 24 führt, der insgesamt steiler ist als der Bereich 20. Hierdurch kann zwar weniger Kraft übertragen werden, jedoch findet die Hubbewegung in diesem Bereich schneller statt. Es sei erwähnt, dass das Gewindeelement 18 auch mehr oder weniger als den in Fig. 1 gezeigten, nahezu vollständigen Gewindegang aufweisen kann. Ferner können die Größen der Bereiche 20 bis 24 gegenüber Fig. 2 verändert sein.

## Patentansprüche

1. Aktuator mit einem Antrieb, zumindest einem drehbaren Gewindeelement (18) und zumindest einem hierdurch translatorisch angetriebenen Abtriebselement, **dadurch gekennzeichnet, dass** das Gewindeelement (18) zumindest zwei Bereiche (20, 22, 24) unterschiedlicher Steigung aufweist.

2. Aktuator nach Anspruch 1,
**dadurch gekennzeichnet , dass** das Gewinde am Beginn (20) eine flachere Steigung aufweist als in anderen Bereichen (22, 24).

3. Aktuator nach Anspruch 1 oder 2,
**dadurch gekennzeichnet, dass** eine Rotationsachse (10) des Gewindeelements (18) bezüglich einer Translationsachse des Abtriebselements geneigt ist.

4. Aktuator nach zumindest einem der vorangehenden Ansprüche,, **dadurch gekennzeichnet, dass** das Gewindeelement (18) eine Oberfläche aufweist, mit der zumindest ein Abschnitt des Abtriebselements in Berührung steht, und die zumindest an einem Beginn (20) des Gewindes weitgehend senkrecht zur Translationsachse des Abtriebselements ist.

5. Aktuator nach zumindest einem der vorangehenden Ansprüche in Kombination mit einem Ventilelements, das lediglich translatorisch bewegt, und nicht verdreht wird.

6. Aktuator nach Anspruch 5, **dadurch gekennzeichnet, dass** eine Stelle, an der zumindest ein Abschnitt des Abtriebselements mit dem Gewindeelement (18) in Berührung steht, zumindest weitgehend mit einer Translationsachse des translatorisch bewegten Ventilelements fluchtet.

7. Aktuator nach Anspruch 6, **dadurch gekennzeichnet, dass** eine Öffnungsrichtung eines Ventilelements gegen den Abgasdruck verläuft.

8. Aktuator nach Anspruch 7 oder 8, **dadurch gekennzeichnet, dass** dieser eine einstufige Übersetzung aufweist.

9. Aktuator nach einem der Ansprüche 6 bis 8, **dadurch gekennzeichnet, dass** das Gewindeelement (18) mit einem Federelement verbunden ist, das beim Betätigen des Ventils lediglich verdreht wird.

10. Aktuator nach einem der vorangehenden Ansprüche ferner mit einem integralen Ventilgehäuse.

11. Aktuator nach Anspruch 10, **dadurch gekennzeichnet, dass** das Ventilgehäuse zumindest einen Kühlkanal aufweist.

12. Aktuator nach einem der Ansprüche 1 bis 4 in Kombination mit einem Wastegate oder einer variablen Turbinengeometrie eines Turboladers.

13. Abgasrückführventil, Wastegate oder variable Turbinengeometrie eines Abgasturboladers mit zumindest einem Aktuator nach zumindest einem der Ansprüche 1 bis 4.
